# EUROPÄISCHE PATENTANMELDUNG

(11) **EP 4 428 496 A1**
(43) Veröffentlichungstag der Anmeldung: **11.09.2024**
(21) Anmeldenummer: 23160516.3
(22) Anmeldetag: 07.03.2023
(51) Int. Cl.: G01D 4/00, G01R 19/25, G06Q 50/06, G06F 12/14, G06F 21/62, G06F 21/71

(54) **VERFAHREN ZUR ERMITTLUNG EINES APPROXIMIERTEN GESAMTENERGIEVERBRAUCHS EINES GERÄTS DER GEBÄUDEAUTOMATION UND EINE ENTSPRECHENDE AUSWERTEEINHEIT**

(71) Anmelder: GIRA GIERSIEPEN GmbH & Co. KG, 42477 Radevormwald (DE)
(72) Erfinder: Schimmelpfennig, Frank, 42477 Radevormwald (DE)
(74) Vertreter: Angerhausen, Christoph

(57) **Zusammenfassung**

Die Erfindung betrifft ein Verfahren zur Ermittlung einer CO2-Bilanz eines Geräts (1) der Gebäudeautomation, welches in verschiedenen Betriebszuständen mit einer nutzungsabhängigen Dauer betrieben werden kann, wobei das Verfahren die Schritte aufweist:
- Erfassen (100) eines Nutzungsprofils des Geräts (1) mittels einer Auswerteeinheit (2) des Geräts (1), wobei das Nutzungsprofil zumindest ein Leistungsaufnahmeprofil des Geräts (1) oder ein zeitlich aufgelöstes Signal einer für das Gerät (1) betriebsrelevanten Größe, welches eine Berechnung des Leistungsaufnahmeprofils des Geräts (1) ermöglicht, aufweist;
- Speichern (300) des Nutzungsprofils in der Auswerteeinheit (2);
- Auslesen (400) des Nutzungsprofils über eine Datenschnittstelle (25); und
- Auswerten (500) des Nutzungsprofils, wobei aus dem Nutzungsprofil ein approximierter Gesamtenergieverbrauch des Geräts (1) berechnet wird.

## Beschreibung

Die Erfindung betrifft das technische Gebiet der Bestimmung eines Energieverbrauchs von Geräten der Gebäudeautomation.

Im Zuge der Bestrebung zur Verlangsamung des Klimawandels werden national und international seitens der Gesetzgeber zunehmend Regularien und Gesetzte implementiert, welche die Ermittlung eines "Carbon Footprint" oder einer "CO₂-Bilanz" vorsehen. Hierbei handelt es sich um eine Energie- und Treibhausgasbilanz, welche in eine äquivalente CO₂ Emissionsmasse umgerechnet wird. Gegenstand der Bilanzierung sind neben Organisationen und Individuen zunehmend auch Dienstleistungen und insbesondere Produkte. So wurde zuletzt die internationale Norm ISO 14064-3 verabschiedet, welche die Berechnung und Zertifizierung eines produktspezifischen Carbon Footprints normiert. Neben den Emissionsäquivalenten, welche während der Herstellung des Produkts anfallen, entstehen weitere Emissionen am Lebensende des Produkts durch Entsorgung, sogenannte "End-of-Life-Treatment Emissions", und Emissionen durch die Verwendung des Produkts. Während sich die ersten beiden Emissionsquellen im Wesentlichen deterministisch berechnen lassen, so besteht bei der Bestimmung der Letzteren große Unsicherheiten. Da die Emissionen während der Verwendung des Produkts durch das im Vorfeld unbekannte Nutzungsprofil bestimmt werden, bedarf es zur Ermittlung der CO₂-Bilanz aufwendiger Modelle, welche ein Nutzungsprofil vorhersagen und approximieren sollen. Ein Nutzungsprofil im Sinne der Erfindung ist ein Leistungsaufnahmeprofil des Geräts oder ein zeitlich aufgelöstes Signal einer für das Gerät betriebsrelevanten Größe aufweist, welches eine Berechnung des Leistungsaufnahmeprofils des Geräts ermöglicht. Ein Nutzungsprofil kann ferner einen Verlauf oder zeitlich aufgelöstes Signal zumindest einer für das jeweilige Gerät relevante Betriebsgröße oder Betriebsparameter, beispielweise eine Aktuatorenstellung, einen Betriebszustand oder energetischer Zustand aufweisen.

Insbesondere hinsichtlich elektrischer Geräte in der Gebäudeautomation, welche verschiedene Betriebszustände, die mit einer nutzungsabhängiger Dauer betrieben werden, aufweisen, welche beispielsweise Türkommunikations- und Zutrittskontrollsysteme, smarte Heizkörperthermostate, Smartswitches, Aktuatoren für Rollladen oder Fensteröffner etc. umfassen, bestehen erhebliche Unsicherheiten bei den Modellansätzen und Modellierungsparametern bzw. Nutzungsrandbedingungen. Beispielsweise ist eine Türsprechanlage in einem Bürogebäude viel häufiger in einem aktiven Zustand als eine Türsprechanlage in einem Einfamilienhaus. Insbesondere unterscheidet sich der Energieverbrauch einer Türstation im Betriebszustand mit aktivierter Kamera deutlich von dem Energieverbrauch eines Stand-by Betriebszustands. Derzeit können mangels realer Nutzungsdaten Modelle für Nutzungsprofile nicht ausreichend validiert werden. Um sich dennoch nicht dem Vorwurf der Irreführung auszusetzen, werden deshalb Modellansätze und Modellparameter äußerst konservativ ausgewählt. Dies resultiert wiederum in einer unrealistisch hohen CO₂-Bilanz des Produkts. Durch die hohe Signalwirkung der CO₂-Bilanz auf den Verbraucher und ggf. zusätzliche Kosten durch den Erwerb von CO₂-Zertifikaten hat eine hohe CO₂-Bilanz eines Produktportfolios erhebliche wettbewerbliche Konsequenzen. Dementsprechend ist es von gesteigertem Interesse für einen Hersteller von Geräten der Gebäudeautomation, eine umfassende und vor allem vertrauenswürdige Datengrundlage für die Erstellung und Validierung von Nutzungsprofilmodellen zu generieren.

Die aus dem Stand der Technik bekannten Vorrichtungen und Verfahren zur Bestimmung von CO₂-Bilanzen von einzelnen elektrischen Geräten eignen sich im Kontext der Gebäudeautomatisierung nur sehr eingeschränkt. So beschreibt die EP 2407923 A2 eine Vorrichtung zur Überwachung von CO₂-Emissionen, wobei die Vorrichtung zwischen einen Netzstecker eines elektrischen Geräts und eine Steckdose geschaltet wird. Die Vorrichtung misst die Leistungsaufnahme und kommuniziert diese mit anderen Messgrößen drahtlos an ein Datencenter. Ein alternatives Verfahren wird in der US 2010019147 A1 offenbart. Hierbei wird dem Stromzähler eines Haushalts eine Messvorrichtung vorgeschaltet, welche an das Hausnetz angeschlossene elektrische Geräte anhand charakteristischer Gerätesignaturen erkennt und diesen eine Leistungsabnahme zuordnet.

Bei den oben genannten Vorrichtungen ist problematisch, dass deren bauliche Komplexität die eines durchschnittlichen Geräts der Gebäudeautomatisierung um ein Vielfaches überschreitet, sodass eine umfangreiche Bestimmung der CO₂-Bilanz durch diese Vorrichtungen hinsichtlich der Unwirtschaftlichkeit bereits im Ansatz entfällt. Ferner wird zwingend vorausgesetzt, dass die Geräte an ein gemeinsames Stromnetz, insbesondere ein Hausnetz angeschlossen sind. Viele Geräte der Gebäudeautomation werden jedoch autark durch Batterien oder durch Peripheriegeräte mit Strom versorgt.

Insbesondere ist problematisch, dass ein Verbraucher einer Überwachung durch einer oben genannten Vorrichtung und eine subsequente Datenübermittlung des Nutzungsprofils an einen Gerätehersteller nur selten zustimmen wird. Auch wenn Nutzungsprofile ohne eine direkte Zuordnung zu einem Verbraucher beim Gerätehersteller gespeichert werden, lassen sich diese aufgrund eines hohen Detailgrades mit nur geringem technischem Aufwand nachträglich individuellen Verbrauchern zuordnen. Im Kontext der Gebäudeautomation könnte dies Einblicke in intime Lebensbereiche der Verbraucher gewähren. Wegen zahlreicher Verbraucherdatenschutzskandale der vergangenen Jahre ist eine Akzeptanz für entsprechende Verfahren sehr begrenzt. Mit den Verfahren aus dem Stand der Technik lassen sich Verhaltensweisen der Verbraucher bis in das kleinste Detail erfassen. Dabei dürften seitens des Verbrauchers begründete Zweifel bestehen, ob dieses umfangreiche Überwachungspotenzial seitens des Herstellers oder gar Dritter unbemerkt ausgeschöpft wird. Um ausreichend Vertrauen in die Datensicherheit und damit Akzeptanz beim Verbraucher schaffen, bedarf es deshalb ein Verfahren, welches inhärent eine datensensible Verbrauchsdatenerfassung garantiert.

Diese Probleme werden durch ein Verfahren zur Ermittlung einer CO₂-Bilanz eines Geräts der Gebäudeautomation entsprechend den Merkmalen des Anspruchs 1 gelöst. Besonders vorteilhafte Ausführungsformen sind Gegenstand der abhängigen Ansprüche.

Dementsprechend ist vorgesehen, dass das Verfahren zur Ermittlung einer CO₂-Bilanz eines Geräts der Gebäudeautomation die Schritte aufweist:
- Erfassen eines Nutzungsprofils des Geräts mittels einer Auswerteeinheit des Geräts, wobei das Nutzungsprofil zumindest ein Leistungsaufnahmeprofil des Geräts (1) oder ein zeitlich aufgelöstes Signal einer betriebsrelevanten Größe, welches eine Berechnung des Leistungsaufnahmeprofils des Geräts (1) ermöglicht, aufweist;
- Speichern des Nutzungsprofils in der Auswerteeinheit;
- Auslesen des Nutzungsprofils über eine Datenschnittstelle der Auswerteeinheit; und
- Auswerten des Nutzungsprofils, wobei aus dem Nutzungsprofil ein approximierter Gesamtenergieverbrauch des Geräts berechnet wird.

Nach einer beliebigen Betriebsdauer des Geräts, beispielsweise nach Einwilligung zur Erfassung durch einen Benutzer des Geräts oder nach einer Reklamation des Geräts, wird das Nutzungsprofil durch den Gerätehersteller ausgelesen. Das Auslesen kann lokal im Hause des Benutzers durch einen Techniker vorgenommen werden oder das Gerät durch den Benutzer zu diesem Zwecke an den Hersteller geschickt werden. Anhand des ausgewerteten Nutzungsprofils kann eine bessere Einschätzung der tatsächlichen nutzungsbedingten Leistungsaufnahme erfolgen, welche im Stand der Technik bisher ausschließlich auf Basis von Hypothesen abgeschätzt wurde. Der approximierte Gesamtenergieverbrauch kann ein Energieverbrauch des Geräts während der Betriebsdauer des Geräts oder eines Bruchteils der Betriebsdauer des Geräts sein. Sollte die Betriebsdauer kürzer als die durch den Hersteller erwartete Gesamtbetriebsdauer des Geräts sein, kann der approximierte Gesamtenergieverbrauch berechnet werden, indem für eine Differenzdauer zwischen Gesamtbetriebsdauer und Betriebsdauer der korrespondierende Energieverbrauch des Nutzungsprofils herangezogen wird.

Der approximierte Gesamtenergieverbrauch des Geräts wird unter Berücksichtigung einer Energieversorgung des Geräts zur Berechnung einer CO₂-Bilanz des Geräts herangezogen werden. Der CO₂-Bilanz des Geräts können ferner die Emissionen der Herstellung und des "End-of-Life-Treatment" hinzugerechnet werden. Ebenfalls kann eine dem Hersteller bekannte nutzungsunabhängige Verlustleistung des Geräts, welche nicht in dem Nutzungsprofil erfasst werden kann, beim Auswerten berücksichtigt werden. Die Auswerteeinheit im Sinne der Erfindung ist ein in das Gerät integrierter Mikrocontroller, Mikroprozessor oder System on an Chip, welcher mit zumindest einer Messeinrichtung zum Erfassen eines Nutzungsprofils in Kommunikation steht oder diese Messeinrichtung selbst aufweist. Ferner kann die Auswerteeinheit die Steuereinheit des Geräts sein oder Teil der Steuereinheit sein, welche dazu eingerichtet ist, alle wesentlichen Steuer- und Regelaufgaben des Geräts der Gebäudeautomation zu übernehmen. Als solches sind Hardware und Speicheranforderungen an das Steuergerät zur Durchführung des Verfahrens nur minimal erhöht. Somit unterscheidet sich ein Gerät, welches sich für das Verfahren eignet, meist nur durch eine Datenschnittstelle von gattungsgemäßen Geräten der Gebäudeautomatisierung. Es werden keine zusätzliche Messvorrichtungen mit entsprechendem Installationsaufwand benötigt und höhere Herstellung bzw. Anschaffungskosten können vermieden werden, sofern die im Gerät schon vorhandene elektronische Schaltung die genannte Aufgabe übernehmen kann. Hierdurch wird wiederum die Akzeptanz des Benutzers für das Verfahren erhöht. Die Datenschnittstelle kann zur drahtgebundenen oder drahtlosen Datenübertragung eingerichtet sein. Funktionen der Datenschnittstelle können auf das Auslesen beschränkt sein. Als Datenschnittstelle kann auch eine bereits im Gerät vorhandene Serviceschnittstelle verwendet werden, die beispielsweise für die Programmierung des Produktes oder zum Auslesen von Fehlern genutzt wird.

Das Leistungsaufnahmeprofil kann über eine Betriebsdauer des Geräts zu einem summierten Energieverbrauch integriert werden. Das Nutzungsprofil kann den summierten Energieverbrauch aufweisen. Alternativ oder zusätzlich kann mittels des zeitlich aufgelösten Signals einer für das Gerät betriebsrelevanten Größe der summierte Energieverbrauch berechnet werden. Hierzu kann eine auf die betriebsrelevante Größe konditionierte Leistungsaufnahme des Geräts mit herangezogen werden, welche dem Hersteller bekannt ist. Das berechnete Leistungsaufnahmeprofil kann über eine Betriebsdauer des Geräts zu einem summierten Energieverbrauch integriert werden.

Das Verfahren kann ferner den Schritt aufweisen:
- Anonymisieren (200) des Nutzungsprofils mittels der Auswerteeinheit (2), wobei ein anonymisiertes Nutzungsprofil erstellt wird, welches eine eindeutige Zuordnung des anonymisierten Nutzungsprofil zu dem Gerät (1) verhindert;
wobei beim Speichern (300) ausschließlich oder zusätzlich das anonymisierte Nutzungsprofil in der Auswerteeinheit (2) gespeichert wird, wobei beim Auslesen (400) ausschließlich oder zusätzlich das anonymisierte Nutzungsprofils über eine Datenschnittstelle (25) des Geräts (1) ausgelesen wird, und wobei beim Auswerten (500) ausschließlich oder zusätzlich aus dem anonymisierten Nutzungsprofil ein approximierter Gesamtenergieverbrauch des Geräts (1) berechnet wird.

Das anonymisierte Nutzerprofil erlaubt keine vollständige Rekonstruktion des Nutzerverhaltens, sodass ebenfalls keinerlei Rückschlüsse auf Kunden gezogen werden können. Beim Auswerten des anonymisierten Nutzungsprofils kann der Hersteller aufgrund des eigenen gerätespezifischen Wissens von dem anonymisierten Nutzungsprofil auf einen approximierten Gesamtenergieverbrauch schließen. Anhand des approximierten Gesamtenergieverbrauchs lassen sich anschließend Nutzungsprofilmodelle anpassen und validieren. Ohne das gerätespezifische Wissen des Herstellers ist das anonymisierte Nutzungsprofil bedeutungslos, sodass die ermittelten Daten für dritte unbrauchbar sind. Hierdurch hat der Benutzer die Gewissheit, dass das Erfassen tatsächlich zweckgebunden und das Nutzungsprofil ausschließlich für den Hersteller aussagekräftig ist. Das anonymisierte Nutzerprofil kann den summierten Energieverbrauch aufweisen.

Darüber hinaus kann das Nutzungsprofil an einer geschützten Speicheradresse eines Speichers der Auswerteeinheit gespeichert werden. Hierbei kann die geschützte Speicheradresse gegen ein Auslesen durch die Datenschnittstelle geschützt sein. Somit wird sichergestellt, dass zu keinem Zeitpunkt Zugriff auf möglicherweise sensible Daten im Nutzungsprofil gewährt wird. Der Benutzer muss somit nicht auf die Integrität des Herstellers oder eines Technikers, welcher das Auslesen vornimmt, vertrauen. Ferner kann der Speicher an der geschützten Speicheradresse nach dem Anonymisieren mit einem neuen Nutzungsprofil oder einer zufälligen Zahlenreihe überschrieben werden. Selbst wenn sich Zugang zu der geschützten Speicheradresse verschafft wird, werden keinerlei sensible Daten preisgegeben.

Sowohl das Erfassen, Anonymisieren und/oder Speichern können nach einer Zeitspanne wiederholt werden. Die Zeitspanne beispielsweise kann eine Stunde, ein Tag, eine Woche, ein Monat oder ein Jahr sein. Hierdurch wird ein Speicherbedarf reduziert, indem das Nutzungsprofil nur für begrenzte Zeiträume gespeichert werden muss. Nach dem Speichern kann das Nutzungsprofil durch ein neues Nutzungsprofil überschrieben werden. Auch hierdurch die Datensensibilität erhöht sich, indem das Nutzungsprofil zu jedem Zeitpunkt nur bruchstückhaft im Speicher vorliegt. Hierbei kann beim Anonymisieren ein neues anonymisiertes Nutzungsprofil aus dem neuen Nutzungsprofil erstellt werden und ein gewichtetes Mittel aus dem anonymisierten Nutzungsprofil und dem neuen anonymisierten Nutzungsprofil berechnet werden. Das gewichtete Mittel kann somit im anonymisierten Nutzungsprofil gespeichert werden. Eine Gewichtung für das neue anonymisierte Nutzungsprofil kann dabei die Zeitspanne sein. Eine Gewichtung für das anonymisierte Nutzungsprofil kann dabei eine Gesamtbetriebsdauer des Geräts abzüglich der Zeitspanne oder ein durchschnittlicher Serviceintervall des Geräts abzüglich der Zeitspanne sein. Alternativ kann lediglich ein während einer zuletzt vollständig vergangenen Zeitspanne erfasstes Nutzungsprofil berücksichtigt werden, wobei beim Auswerten ausschließlich der approximierte Gesamtenergieverbrauch des Geräts der zuletzt vollständig vergangenen Zeitspanne berechnet wird.

Das anonymisierte Nutzungsprofil kann eine generische Identifikation des Geräts aufweisen, welcher das anonymisierte Nutzungsprofil einem Gerätetyp zuordnet.

Ferner kann das Nutzungsprofil einen Betriebszustandsverlauf des Geräts aufweisen. Ein Betriebszustand kann ein Aktiv-, Ausgeschalteter-, Stand-by-, Volllast-, Teillast-, Kamera-Ein, Kamera-Aus, Power-Down oder Fehlfunktionszustand des Geräts sein. Betriebszustände im Sinne der Erfindung können sowohl parallel als auch sequenziell durch das Gerät eingenommen werden. Der Betriebszustandsverlauf kann dabei der zeitlich aufgelöste Verlauf aller durch das Gerät eingenommenen Betriebszustände sein. Alternativ oder zusätzlich kann der Betriebszustandsverlauf Start- und Endzeitpunkte der durch das Gerät eingenommenen Betriebszustände aufweisen. Aus dem Betriebszustandsverlauf kann zumindest eine Betriebszustandsdauer eines Betriebszustands integriert werden. Die Betriebszustandsdauer kann im Nutzungsprofil und/oder im anonymisierten Nutzungsprofil gespeichert werden. Vorteilhaft ist hierbei, dass keine expliziten Informationen über den Energieverbrauch gespeichert oder übermittelt werden. Lediglich der Hersteller kann den Betriebszuständen einen spezifischen Energieverbrauch zuordnen, sodass das anonymisierte Nutzungsprofil für Dritte gänzlich nichts sagend ist. Beispielsweise kann bei dem Erfassen jeweils erfasst werden, für wie lange und wann genau eine Türstation einen Aktivzustand einnimmt. Durch das Aufsummieren der Aktivzustandsdauern kann eine Betriebszustandsdauer des Aktivzustands integriert werden. Die Betriebszustandsdauer des Aktivzustands wird im anonymisierten Nutzungsprofil hinterlegt. Als solches ist aus dem anonymisierten Nutzungsprofil nicht mehr erkennbar, zu welchem Zeitpunkt genau die Türstation betrieben wurde. Jedoch kann erfasst werden, mit welchem Funktionsumfang die Türstation jeweils betrieben wurde. Da der Energieverbrauch vom genutzten Funktionsumfang abhängt, kann der Hersteller aus der Betriebszustandsdauer einen Gesamtenergieverbrauch approximieren, ohne dass hierfür sensible Information übermittelt werden müssen. Beim Anonymisieren können aus den Betriebszuständen Betriebszustandswahrscheinlichkeiten berechnet werden. Hierzu werden die individuellen Betriebszustandsdauern durch die Betriebsdauer des Geräts geteilt. Das anonymisierte Nutzungsprofil kann folglich die Betriebszustandswahrscheinlichkeiten aufweisen.

Beim Anonymisieren kann aus dem Nutzungsprofil zumindest eine Leistungskennzahl des Geräts berechnet werden. Das anonymisierte Nutzungsprofil kann die zumindest eine Leistungskennzahl aufweisen. Eine Leistungskennzahl kann eine Vollaststundenzahl, eine gemittelte Leistungsaufnahme, eine Leistungsaufnahmevarianz oder Leistungsaufnahmeschiefe sein. Alternativ oder zusätzlich können auch höher statistische Momente der Leistungsaufnahme berechnet werden und anonymisierten Nutzungsprofil beigefügt werden. Hieraus lässt sich beim Auswerten eine Wahrscheinlichkeitsdichtefunktion konstruieren, welche sich hervorragend zum Validieren von Nutzungsprofilmodellen eignet.

Darüber hinaus kann beim Speichern das anonymisierte Nutzungsprofil über ein kryptographisches Protokoll verschlüsselt werden. Die Verschlüsslung des anonymisierten Nutzungsprofils kann mittels eines Schlüssels aufgehoben werden, welcher lediglich dem Benutzer bekannt ist. Sollte der Benutzer sein Einverständnis zu dem Auslesen erteilen, kann der Schlüssel zwecks des Entschlüsselns an den Hersteller des Geräts übermittelt werden.

Das Auslesen kann während einer Wartung des Geräts durch einen Techniker und/oder einer Reklamation des Geräts und/oder am Lebensende des Geräts durchgeführt werden.

Ferner wird eine entsprechende Auswerteeinheit zur Durchführung des Verfahrens mit den Merkmalen des Anspruchs 14 beansprucht. Ansprüche 15 bis 17 beschreiben jeweils vorteilhafte Ausführungsformen der Auswerteeinheit. Gegenstand des Anspruchs 18 ist ein Gerät der Gebäudeautomatisierung umfassend eine entsprechende Auswerteeinheit.

Die Auswerteeinheit zur Steuerung eines Geräts der Gebäudeautomation umfasst eine erste Speichereinrichtung und eine Datenschnittstelle, wobei die Auswerteeinheit dazu eingerichtet ist, ein Nutzungsprofil eines Geräts der Gebäudeautomation zu erfassen, ein anonymisiertes Nutzungsprofil aus den dem Nutzungsprofil zu erstellen und das anonymisierte Nutzungsprofil in der ersten Speichereinrichtung bereitzustellen, wobei die Datenschnittstelle dazu eingerichtet ist, auf die ersten Speichereinrichtung zuzugreifen und das anonymisierte Nutzungsprofil an ein Endgerät zu übermitteln.

Die Auswerteeinheit kann eine zweite Speichereinrichtung umfassen, wobei die Steuereinrichtung dazu eingerichtet ist, das Nutzungsprofil in der zweiten Speichereinrichtung zu speichern und wobei die Datenschnittstelle keinen Zugriff auf die zweite Speichereinrichtung hat.

Die Datenschnittstelle kann dazu eingerichtet sein, das anonymisierte Nutzungsprofil drahtlos, vorzugsweise über ein Low Power Wide Area Network Funkstandard zu übermitteln.

Alternativ kann vorgesehen sein, dass das Gerät dazu eingerichtet ist, die Datenschnittstelle ausschließlich durch eine Zerstörung des Geräts freizulegen. Die Zerstörung des Geräts findet nach einer Einsendung oder Abholung durch den Hersteller statt. Ein unbemerktes Auslesen der Datenschnittstelle kann somit verhindert werden und der Benutzer hat die zusätzliche Gewissheit, dass eine ungewollte Überwachung des Nutzungsverhaltens ausgeschlossen ist.

Weitere Einzelheiten und Details der Erfindung werden anhand der Figuren erläutert. Dabei zeigt:
- Figur 1:: ein Ablaufdiagramm eines erfindungsgemäßen Verfahrens; und
- Figur 2:: eine schematische Darstellung eines erfindungsgemäßen Geräts der Gebäudeautomatisierung.

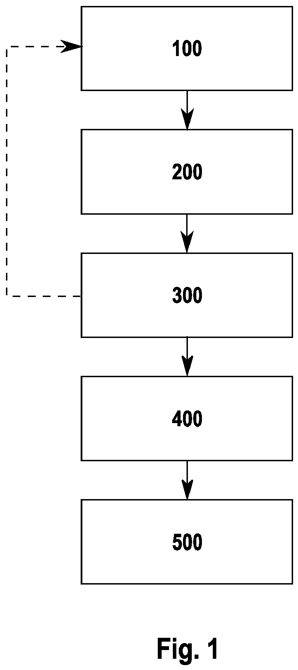

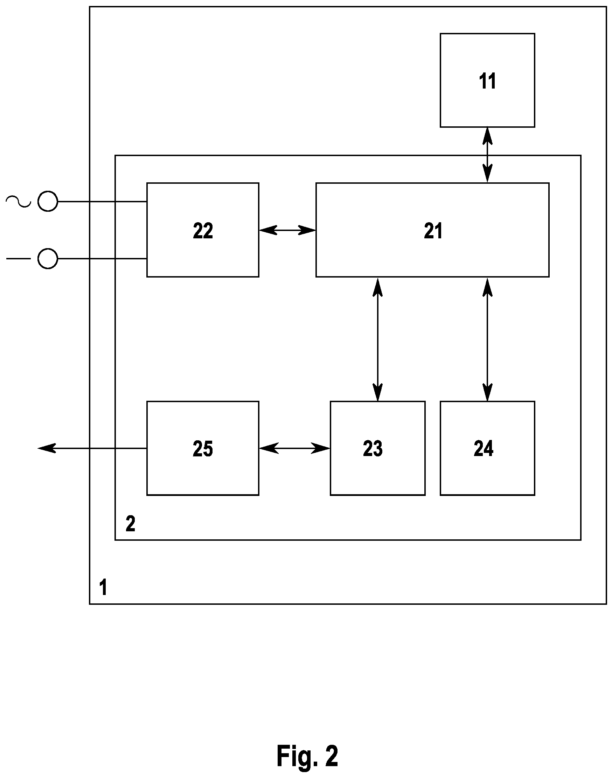

Fig. 1 zeigt ein Ablaufdiagramm eines erfindungsgemäßen Verfahrens zur Ermittlung einer CO₂-Bilanz eines Geräts der Gebäudeautomation 1, welches schematisch in Fig. 2 dargestellt ist.

Zunächst wird während des Erfassens 100 eines Nutzungsprofils des Geräts 1 mittels einer Auswerteeinheit 2 des Geräts 1 erfasst und in einer zweiten Speichereinrichtung 24 gespeichert. Im vorliegenden Fall ist die Auswerteeinheit 2 die Steuereinheit 2 des Geräts 1, welches ein Aktuator 11 des Geräts gesteuert. Das Nutzungsprofil weist einen Betriebszustandsverlauf des Geräts 1 auf, wobei die Betriebszustände des Betriebszustandsverlaufs ein Standby-, Teillast-, und Volllastzustand sind. Nach einer Zeitspanne von 24 Stunden wird beim Anonymisieren 200 mittels der Steuereinheit 2 ein anonymisiertes Nutzungsprofil erstellt. Alternativ kann das Anonymisieren 200 nach einer festgelegten Anzahl von Betriebszustandsänderungen durchgeführt werden oder an einem Zeitpunkt, wenn der zweite Speichereinrichtung 24 vollständig mit dem Nutzungsprofil gefüllt ist.

Das anonymisierte Nutzungsprofil verhindert eine eindeutige Zuordnung des anonymisierten Nutzungsprofils zu dem Gerät 1. Dies wird erreicht, indem aus dem Betriebszustandsverlauf drei Betriebszustandswahrscheinlichkeiten berechnet werden, welche den Wahrscheinlichkeiten entsprechen, dass das Gerät 1 in Standby-, Teillast-, und Volllastzustand betrieben wurde. Anschließend werden die drei Betriebszustandswahrscheinlichkeiten als anonymisiertes Nutzungsprofil während des Speicherns 300 in einem ersten Speicher 23 der Steuereinheit gespeichert.

Anschließend werden die Schritte 100 bis 300 nach einer Zeitspanne von 24 Stunden wiederholt. Hierbei wird während des Erfassens 100 ein neues Nutzungsprofil durch die Steuerungseinheit 1 erfasst, wobei das Nutzungsprofil im zweiten Speicher 24 überschrieben wird. Daraufhin wird wie oben beschrieben beim Anonymisieren 300 ein neues anonymes Nutzungsprofil erstellt. Aus dem neuen anonymen Nutzungsprofil und dem anonymen Nutzungsprofil wird durch die Steuereinheit 2 ein gewichtetes Mittel berechnet, wobei das neue anonyme Nutzungsprofil mit der Zeitspanne und das anonyme Nutzungsprofil mit einer Gesamtbetriebsdauer des Geräts 1 abzüglich der Zeitspanne gewichtet ist. Das gewichtete Mittel wird anschließend beim Speichern 300 als anonymes Nutzungsprofil im ersten Speicher 23 gespeichert.

Ferner können hierbei die drei Betriebszustandswahrscheinlichkeiten zu einer Zahl kombiniert werden, wobei ausgewählte Zehnerpotenzen der Zahl den individuellen Betriebszustandswahrscheinlichkeiten zugeordnet sind. Dabei ist die genaue Zuordnung von Zehnerpotenzen und Betriebszustandswahrscheinlichkeiten nur dem Hersteller bekannt. Nur durch ein entsprechendes Parsing der Zahl können die Betriebszustandswahrscheinlichkeiten zurückerhalten werden, um das gewichtete Mittel zu berechnen oder anonymisierte das Nutzungsprofil beim Auslesen 500 auswerten zu können.

In der beschriebenen Ausführungsform bedarf es für das Speichern des anonymisierten Nutzungsprofils einem vernachlässigbar kleinen Speicherbedarf pro Datenpunkt des Nutzungsprofils. Damit ist der zusätzlich benötigte Speicherbedarf des Geräts 1 für die Durchführung des Verfahrens mehrere Größenordnungen kleiner als ein

Speicherbedarf, welcher im Rahmen von gewöhnlichen Steuer-, Kommunikations- und Regelaufgaben eines gattungsgemäßen Geräts der Gebäudeautomation benötigt wird.

Nach einem gerätetypischen Serviceintervall wird das Auslesen 400 durch einen Techniker vollzogen. Hierzu wird dem Techniker Zugang zu einer Datenschnittstelle 25 des Geräts 1 verschafft. Die Datenschnittstelle 25 ist dazu eingerichtet, eine kabelgebundene Kommunikation mit einem Endgerät des Technikers herzustellen und auf den ersten Speicher 23 zuzugreifen. Der erste Speicher 23 und der zweite Speicher 24 sind hardwareseitig getrennt, sodass ein Auslesen des zweiten Speichers 24 durch die Datenschnittstelle 25 ausgeschlossen ist und ein Zugriff auf das Nutzungsprofil unmöglich ist. Das anonymisierte Nutzungsprofil wird zusammen mit einer generischen Typenbezeichnung des Geräts an das Endgerät übermittelt und dort gespeichert. Während des Auslesens 400 können noch weitere wartungsbezogene Handlungen durch den Techniker über die Datenschnittstelle durchgeführt werden, beispielsweise das Aufspielen einer neuen Firmware oder das Auslesen eines Fehlerspeichers.

Beim Hersteller wird das anonymisierte Nutzungsprofil zusammen mit anonymisierten Nutzungsprofilen von typengleichen oder typenähnlichen Geräten in einer Datenbank gesammelt. Da das anonymisierte Nutzungsprofil lediglich Betriebszustandswahrscheinlichkeiten aufweist, können keine expliziten Rückschlüsse auf das individuelle Nutzerverhalten oder den Gesamtenergieverbrauch des Geräts 1 geschlossen werden. Ferner kann das anonymisierten Nutzungsprofil einem dem Benutzer des Geräts 1 nicht zugeordnet werden. Der Benutzer muss sich somit keine Sorgen machen, dass sein Energieverbrauch oder Nutzungsverhalten durch Datenhandel oder ein Datenleck publik wird.

Beim Auswerten 500 wird aus dem anonymisierten Nutzungsprofil ein Gesamtenergieverbrauch des Geräts 1 ästimiert. Dem Hersteller sind spezifische Energieverbräuche der Betriebszustände des Geräts als auch die Dauer eines durchschnittlichen Wartungsintervalls. Zusammen mit den Betriebszustandswahrscheinlichkeiten lässt sich somit eine Leistungsaufnahme des Geräts durch ein Netzteil 22 des Geräts während eines durchschnittlichen Wartungsintervalls approximieren. Durch eine Annahme einer Gesamtlebensdauer des Geräts 1 kann abschließend ein approximierter Gesamtenergieverbrauch des Geräts berechnet werden. Durch Umrechnung in ein CO, Emissions-Äquivalent kann somit eine CO₂-Bilanz für die Benutzung des Geräts 1 abgeschätzt werden. Die Betriebszustandswahrscheinlichkeiten eigenen sich dabei ferner, Modellannahmen zu validieren oder ggf. zu korrigieren.

Beispielsweise kann nach einem Serviceintervall von 2 Jahren festgestellt werden, dass sich der Durchschnittsverbrauch erhöht hat. Daraus kann der Hersteller schlussfolgern, dass das Gerät weniger im Standby betrieben wurde und mehr unter Last. Wird das bei mehreren Geräten ähnliche oder identische Betriebscharakteristiken analysiert, können daraus Schlussfolgerungen auf die Gesamtanwendung des Geräts im Markt gezogen werden. So kann beispielsweise festgestellt werden, dass die Bedeutung des Streamings von Audio oder Video in Türsprech-Empfangsstation zunimmt, während die Nutzung dieser Geräte vorher nur als reine Türsprechanlage beschränkt war. Es können also auch Schlussfolgerungen für künftige Produktentwicklungen gezogen werden, die besser mit den Kundenanforderungen korrespondieren.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Gerät der Gebäudeautomatisierung
- 2: Auswerteeinheit
- 11: Aktuator
- 21: Mikroprozessor
- 22: Netzgerät
- 23: Erste Speichereinrichtung
- 24: Zweite Speichereinrichtung
- 25: Datenschnittstelle
- 100: Erfassen
- 200: Anonymisieren
- 300: Speichern
- 400: Auslesen
- 500: Auswerten

## Patentansprüche

1. Verfahren zur Ermittlung einer CO₂-Bilanz eines Geräts (1) der Gebäudeautomation, welches in verschiedenen Betriebszuständen mit einer nutzungsabhängigen Dauer betrieben werden kann, wobei das Verfahren die Schritte aufweist:
- Erfassen (100) eines Nutzungsprofils des Geräts (1) mittels einer Auswerteeinheit (2) des Geräts (1), wobei das Nutzungsprofil zumindest ein Leistungsaufnahmeprofil des Geräts (1) oder ein zeitlich aufgelöstes Signal einer für das Gerät (1) betriebsrelevanten Größe, welches eine Berechnung des Leistungsaufnahmeprofils des Geräts (1) ermöglicht, aufweist;
- Speichern (300) des Nutzungsprofils in der Auswerteeinheit (2);
- Auslesen (400) des Nutzungsprofils über eine Datenschnittstelle (25); und
- Auswerten (500) des Nutzungsprofils, wobei aus dem Nutzungsprofil ein approximierter Gesamtenergieverbrauch des Geräts (1) berechnet wird.

2. Verfahren nach einem der vorangegangenen Ansprüche, wobei das Leistungsaufnahmeprofil zu einem summierten Energieverbrauch integriert wird und wobei das Nutzungsprofil den summierten Energieverbrauch aufweist.

3. Verfahren nach einem der vorangegangenen Ansprüche, wobei das Nutzungsprofil einen Betriebszustandsverlauf des Geräts (1) aufweist.

4. Verfahren nach Anspruch 3, wobei ein Betriebszustand des Betriebszustandsverlaufs ein Aktiv-, Ausgeschalteter-, Stand-by-, Volllast-, Teillast- und/oder Fehlfunktionszustand des Geräts (1) ist.

5. Verfahren nach Anspruch 3 oder 4, wobei aus dem Betriebszustandsverlauf zumindest eine Betriebszustandsdauer eines Betriebszustands integriert wird und wobei das Nutzungsprofil die Betriebszustandsdauer aufweist.

6. Verfahren nach einem der vorangegangenen Ansprüche, wobei das Verfahren den Schritt aufweist:
- Anonymisieren (200) des Nutzungsprofils mittels der Auswerteeinheit (2), wobei ein anonymisiertes Nutzungsprofil erstellt wird, welches eine eindeutige Zuordnung des anonymisierten Nutzungsprofil zu dem Gerät (1) verhindert;
wobei beim Speichern (300) ausschließlich das anonymisierte Nutzungsprofil in der Auswerteeinheit (2) gespeichert wird, wobei beim Auslesen (400) ausschließlich das anonymisierte Nutzungsprofils über eine Datenschnittstelle (25) des Geräts (1) ausgelesen wird, und wobei beim Auswerten (500) aus dem anonymisierten Nutzungsprofil ein approximierter Gesamtenergieverbrauch des Geräts (1) berechnet wird.

7. Verfahren nach Anspruch 6, wobei das Nutzungsprofil an einer geschützten Speicheradresse eines Speichers der Auswerteeinheit (2) gespeichert wird und wobei die geschützte Speicheradresse gegen ein Auslesen (400) durch die Datenschnittstelle (25) geschützt ist.

8. Verfahren nach Anspruch 7, wobei der Speicher an der geschützten Speicheradresse nach dem Anonymisieren (200) mit einer zufälligen Zahlenreihe überschrieben wird.

9. Verfahren nach einem der Ansprüche 7 oder 8, wobei das Erfassen (100), Anonymisieren (200) und Speichern (300) nach einer Zeitspanne wiederholt wird und wobei das Nutzungsprofil an der geschützten Speicheradresse durch ein neues Nutzungsprofil überschrieben wird.

10. Verfahren nach Anspruch 9, wobei beim Anonymisieren (200) ein neues anonymisiertes Nutzungsprofil aus dem neuen Nutzungsprofil erstellt wird und wobei ein gewichtetes Mittel aus dem anonymisierten Nutzungsprofil und dem neuen anonymisierten Nutzungsprofil berechnet wird, wobei eine Gewichtung für das neue anonymisierte Nutzungsprofil die Zeitspanne ist und eine Gewichtung für das anonymisierte Nutzungsprofil eine Gesamtbetriebsdauer des Geräts (1) abzüglich der Zeitspanne ist, wobei das gewichtete Mittel beim Speichern (300) als anonymisiertes Nutzungsprofil gespeichert wird.

11. Verfahren nach einem der Ansprüche 6 bis 10, wobei beim Anonymisieren (200) aus dem Betriebszustandsverlauf Betriebszustandswahrscheinlichkeiten berechnet werden, wobei das anonymisierte Nutzungsprofil die Betriebszustandswahrscheinlichkeiten aufweist.

12. Verfahren nach einem der vorangegangenen Ansprüche, wobei beim Anonymisieren (200) zumindest eine Leistungskennzahl des Geräts (1) berechnet wird und wobei das anonymisierte Nutzungsprofil die zumindest eine Leistungskennzahl aufweist.

13. Verfahren nach Anspruch 12, wobei die Leistungskennzahl eine Vollaststundenzahl, eine gemittelte Leistungsaufnahme, eine Leistungsaufnahmevarianz oder eine Leistungsaufnahmeschiefe ist.

14. Verfahren nach einem der vorangegangenen Ansprüche, wobei beim Speichern (300) das anonymisierte Nutzungsprofil durch ein kryptografisches Protokoll verschlüsselt wird.

15. Auswerteeinheit (2), welche dazu eingerichtet ist, ein Verfahren nach einem der Ansprüche 1 bis 13 durchzuführen, umfassend eine Speichereinrichtung und eine Datenschnittstelle (25), wobei die Auswerteeinheit (2) dazu eingerichtet ist, ein Nutzungsprofil und/oder ein anonymisiertes Nutzungsprofil eines Geräts (1) der Gebäudeautomation bereitzustellen, wobei die Datenschnittstelle (25) dazu eingerichtet ist, auf die Speichereinrichtung zuzugreifen und das anonymisierte Nutzungsprofil an ein Endgerät zu übermitteln.

16. Auswerteeinheit (2) nach Anspruch 15, umfassend eine zweite Speichereinrichtung (24), wobei die Auswerteeinrichtung dazu eingerichtet ist, das Nutzungsprofil in der zweiten Speichereinrichtung zu speichern und wobei die Datenschnittstelle (25) keinen Zugriff auf die zweite Speichereinrichtung (24) hat.

17. Auswerteeinheit (2) nach einem der Ansprüche 14 oder 15, wobei die Datenschnittstelle (25) dazu eingerichtet ist, das anonymisierte Nutzungsprofil drahtlos, vorzugsweise über ein Low Power Wide Area Network Funkstandart zu übermitteln.

18. Gerät (1) der Gebäudeautomation umfassend eine Auswerteeinheit (2) nach einem der Ansprüche 15 bis 17.
